(19) Europäisches Patentamt
European Patent Office
Office européen des brevets

(11) **EP 2 168 336 B1**

(12) **FASCICULE DE BREVET EUROPEEN**

(45) Date de publication et mention
de la délivrance du brevet:
**12.10.2011 Bulletin 2011/41**

(21) Numéro de dépôt: **08786226.4**

(22) Date de dépôt: **17.07.2008**

(51) Int Cl.:
**H04L 27/00** *(2006.01)*

(86) Numéro de dépôt international:
**PCT/EP2008/059395**

(87) Numéro de publication internationale:
**WO 2009/010563 (22.01.2009 Gazette 2009/04)**

(54) **MÉTHODE DE DÉTECTION DE PRÉSENCE DE SIGNAUX ÉTALÉS SPECTRALEMENT**

VERFAHREN ZUR ERKENNUNG DES VORHANDENSEINS SPEKTRAL GESPREIZTER SIGNALE

METHOD OF DETECTING PRESENCE OF SPECTRALLY SPREAD SIGNALS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **17.07.2007 FR 0756529**

(43) Date de publication de la demande:
**31.03.2010 Bulletin 2010/13**

(73) Titulaire: **Commissariat à l'Énergie Atomique et aux Énergies Alternatives**
**75015 Paris (FR)**

(72) Inventeur: **JALLON, Pierre**
**F-38100 Grenoble (FR)**

(74) Mandataire: **Ilgart, Jean-Christophe et al**
**BREVALEX**
**95 rue d'Amsterdam**
**75378 Paris Cedex 8 (FR)**

(56) Documents cités:
**EP-A- 1 655 872**

• ONER ET AL.: "Air interface recognition for a software radio system exploiting cyclostationarity" IEEE INTERNATIONAL SYMPOSIUM ON PERSONAL, INDOOR AND MOBILE RADIO COMMUNICATIONS, vol. 3, 5 septembre 2004 (2004-09-05), pages 1947-1951, XP010754185 Piscataway, US

• HALFORD, BRANDT-PEARCE: "New-User Identification in a CDMA System" IEEE TRANSACTIONS ON COMMUNICATIONS, vol. 46, no. 1, janvier 1998 (1998-01), pages 144-155, XP011009098 Piscataway, US

• JALLON, CHEVREUIL: "Second-order based cyclic frequency estimates: the case of digital communication signals" IEEE INTERNATIONAL CONFERENCE ON ACOUSTICS, SPEECH, AND SIGNAL PROCESSING, 14 mai 2006 (2006-05-14), pages IV-389-IV-392, XP002475923 New York, US

• SPOONER, GARDNER: "Exploitation of higher-order cyclostationarity for weak-signal detection and time-delay estimation" IEEE SIXTH SP WORKSHOP ON STATISTICAL SIGNAL AND ARRAY PROCESSING, 7 octobre 1992 (1992-10-07), pages 197-201, XP010057410 New York, US

• ÖNER, JONDRAL: "Extracting the channel allocation information in a spectrum pooling system exploiting cyclostationarity" IEEE INTERNATIONAL SYMPOSIUM ON PERSONAL, INDOOR AND MOBILE RADIO COMMUNICATIONS, vol. 1, 5 septembre 2004 (2004-09-05), pages 551-555, XP010754662 Piscataway, US

• MITOLA: "Cognitive Radio" KUNGLIGA TEKNISKA HÖGSKOLAN DISSERTATION, 8 mai 2000 (2000-05-08), XP002475924 Stockholm, SE cité dans la demande

• DANDAWATE, GIANNAKIS: "Statistical Tests for Presence of Cyclostationarity" IEEE TRANSACTIONS ON SIGNAL PROCESSING, vol. 42, no. 9, septembre 1994 (1994-09), pages 2355-2369, XP002381419 New York, US

Description

## DOMAINE TECHNIQUE

La présente invention concerne le domaine de la détection aveugle ou semi-aveugle de signaux étalés spectralement. Elle trouve notamment application dans les systèmes radio opportunistes.

## ÉTAT DE LA TECHNIQUE ANTÉRIEURE

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB (*Ultra Wide Band*). La seconde consiste à utiliser de manière opportuniste une partie du spectre ponctuellement ou temporairement inoccupée, c'est la voie dite de radio opportuniste (ou *Cognitive Radio*). On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Avant de pouvoir émettre dans une bande donnée, il est nécessaire qu'un émetteur puisse déterminer si un signal, et notamment un signal étalé spectralement, est présent dans cette bande. Etant donné que le signal étalé peut être noyé dans le bruit, un simple détecteur de puissance ne permet pas d'obtenir cette information de manière fiable.

De manière générale, on distingue les méthodes de détection à l'aveugle pour lesquelles on ne dispose d'aucune information a *priori* sur le signal dont on veut détecter la présence et les méthodes d'estimation de type semi-aveugle pour lesquelles on connaît certains paramètres du signal à détecter.

Une méthode de détection aveugle de présence de signaux étalés spectralement a été décrite dans l'article de G. Burel intitulé « Detection of spread spectrum transmissions using fluctuations of correlation estimators » publié dans Proc. of IEEE-ISPACS Nov. 5-8, 2000, Honolulu, Hawai. Cette méthode est fondée sur les statistiques d'un moment d'ordre 2 de la fonction d'autocorrélation du signal reçu. Elle exploite le fait que, lorsqu'un signal étalé spectralement est présent, les fluctuations de la fonction d'autocorrélation sont plus importantes qu'en présence d'un simple bruit blanc. Toutefois, là encore, pour de faibles rapports signal à bruit, la méthode de détection ne permet pas de déterminer avec un faible taux d'erreur si un signal étalé spectralement est absent ou présent. Un émetteur opportuniste peut décider à tort d'émettre dans la bande alors qu'un signal étalé est présent, ou bien, *a contrario,* de ne pas émettre alors même que la bande est libre.

L'article de Karen W. Halford et a1. intitulé « New-user identification in a CDMA system », publié dans IEEE Trans. on Comm., Vol. 46, N° 1, Janvier 1998, pages 144-155 décrit une méthode de détection de présence d'un signal étalé spectralement dans un système CDMA. La détection fait appel à un test statistique basé sur les coefficients de corrélation cyclique de la fonction d'autocorrélation, celle-ci étant calculée pour tous les décalages temporels possibles y compris la valeur nulle.

Le but de la présente invention est de proposer une méthode permettant de déterminer avec une grande fiabilité si un signal étalé spectralement est présent ou absent dans une bande de fréquence d'intérêt et ce, même dans des conditions de faible rapport signal à bruit.

## EXPOSÉ DE L'INVEMION

La présente invention est définie par une méthode de détection de présence ou d'absence d'un signal étalé spectralement dans une bande de fréquence d'intérêt d'un signal reçu, dans laquelle :

- on calcule la fonction d'autocorrélation dudit signal reçu pour un ensemble de valeurs non nulles de décalage temporel ;
- on détermine au moins un coefficient de corrélation cyclique de la fonction d'autocorrélation pour lesdites valeurs non nulles de décalage temporel ;
- on estime l'énergie de la fonction d'autocorrélation à partir de la somme quadratique des valeurs prises par ledit coefficient de corrélation cyclique pour lesdites valeurs non nulles de décalage temporel ;
- on compare l'énergie ainsi estimée à une valeur de seuil prédéterminée et l'on déduit du résultat de la comparaison la présence ou l'absence dudit signal étalé spectralement dans le signal reçu.

Selon une première variante, on détermine une pluralité de coefficients de corrélation cyclique de la fonction d'autocorrélation, chaque coefficient de corrélation cyclique étant calculé pour lesdites valeur non nulles de décalage temporel. Avantageusement, lesdits coefficients de corrélation cyclique peuvent être calculés par :

$$\hat{R}_e^{k\alpha}(m) = \frac{1}{U}\sum_{u=0}^{U-1} s(uT_e)s^*((u-m)T_e)e^{2i\pi uk\alpha}$$

où s() est le signal reçu, après translation en bande de base, $U$ est la taille de la fenêtre de corrélation, $T_e$ est la période d'échantillonnage, exprimée en nombre d'échantillons, $m$ est un décalage temporel exprimé en nombre d'échantillons, $k$ est un entier relatif, $\alpha = \dfrac{T_e}{LT_c}$

est le rapport de la période d'échantillonnage à la durée de la séquence d'étalement ayant servi à étaler le spectre du signal.

L'énergie de la fonction d'autocorrélation est alors avantageusement estimée à partir de :

$$\hat{J} = \sum_{m\in S^*}\sum_{k\in\Omega}\left|R_e^{k\alpha}(m)\right|^2$$

où $\Omega$ est un ensemble fini d'entiers relatifs et $S^*$ est un ensemble fini d'entiers relatifs ne comprenant pas la valeur nulle.

Selon une seconde variante, on détermine un coefficient de corrélation cyclique de la fonction d'autocorrélation pour une pluralité de valeurs de décalage temporel. Avantageusement, ledit coefficient de corrélation cyclique est obtenu par :

$$R_e^0(m) = \frac{1}{U}\sum_{u=0}^{U-1} s(uT_e)s^*((u-m)T_e)$$

où s() est le signal reçu, après translation en bande de base, $U$ est la taille de la fenêtre de corrélation, $T_e$ est la période d'échantillonnage, exprimée en nombre d'échantillons, $m$ est un décalage temporel exprimé en nombre d'échantillons.

L'énergie de la fonction d'autocorrélation est alors avantageusement estimée à partir de :

$$\hat{J} = \sum_{m\in S^*}\left|R_e^0(m)\right|^2$$

où $S^*$ est un ensemble fini d'entiers relatifs ne comprenant pas la valeur nulle.

Selon la première ou seconde variante, l'énergie estimée $\hat{J}$ est ensuite comparée à une valeur de seuil prédéterminé $J_0$, calculée en fonction du rapport $\dfrac{U}{\sigma^4}$ où $\sigma^2$ est la variance de bruit.

Pour de faibles rapports signal sur bruit, la variance de bruit, $\sigma^2$ pourra être estimée par :

$$\sigma^2 = \frac{1}{U}\sum_{u=0}^{U-1}\left|s(uT_e)\right|^2$$

On conclura à la présence d'un signal étalé spectralement dans la bande de fréquence d'intérêt si $\hat{J} > J_0$ et, sinon, à l'absence d'un tel signal dans ladite bande.

3

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente la distribution des valeurs de la fonction d'autocorrélation d'un signal étalé spectralement ;
La Fig. 2 représente l'organigramme d'une méthode de détection semi-aveugle de présence d'un signal étalé spectralement, selon un mode de réalisation de l'invention ;
La Fig. 3 représente l'organigramme d'une méthode de détection aveugle de présence d'un signal étalé spectralement, selon un mode de réalisation de l'invention.

## EXPOSÉ DÉTAILLÉ DE MODES DE RÉALISATION PARTICULIERS

Nous considèrerons dans la suite le cas d'un terminal opportuniste, dit aussi secondaire, devant déterminer si un terminal de primaire émet dans une bande de fréquence d'intérêt. Nous supposerons que ce système de télécommunication primaire (c'est-à-dire à bande de fréquence allouée), s'il émet, utilise un étalement spectral direct (*Direct Spread Spectrum*) comme c'est classiquement le cas dans les systèmes CDMA (*Code Division Multiple Acess*). Autrement dit, si un signal étalé spectralement est présent, le terminal opportuniste reçoit :

$$s(t) = \sum_p a_p \sum_{\ell=0}^{L-1} c_\ell g(t - \ell T_c - p T_s) + b(t) \qquad (1)$$

où $c_\ell$, $\ell = 0,..,L\text{-}1$ est la séquence d'étalement spectral, $T_c$ est la période bribe (*chip*), $T_s = L T_c$ est la période symbole, $a_p$ sont les symboles d'information transmis, $g(t)$ est la convolution de l'impulsion de mise en forme d'un symbole par la réponse impulsionnelle du canal, et $b(t)$ est une fonction aléatoire décrivant le bruit.

Nous supposerons, sans perte de généralité, que le signal reçu est échantillonné à la fréquence chip, et nous noterons $e_n = s(nT_c)$ les échantillons en question. On a par conséquent :

$$e_n = a_p c_\ell g_{p,\ell,n} + b_n \qquad (2)$$

avec $g_{p,\ell,n} = g((n\text{-}pL\text{-}\ell)T_c)$ et où $b_n$ sont les échantillons de bruit.

La fonction d'autocorrélation du signal reçu peut alors s'exprimer par:

$$R_e(n,m) = \mathcal{E}\left\{ e_n e_{n-m}^* \right\} \qquad (3)$$

où $\mathbf{\mathit{E}}\{.\}$ désigne l'espérance mathématique et $\mathbf{\mathit{mT_c}} = \tau$ est le décalage temporel entre les versions du signal à corréler.

Si l'on note $n = p_1 L + \ell_1$ et $m = p_2 L + \ell_2$, la valeur $R_e(n,m)$ de la fonction d'autocorrélation peut être écrite sous la forme, étant donné que les échantillons de bruits sont indépendants entre eux et du signal :

$$R_e(n,m) = g_{p_1,\ell_1} g_{p_2,\ell_2}^* . c_{\ell_1} c_{\ell_2}^* \mathcal{E}\left( a_{p_1} a_{p_2}^* \right) + \delta(m)\sigma^2 \qquad (4)$$

où $\delta(.)$ est la distribution de Dirac et $\sigma^2$ est la variance du bruit.

Si $p_1 \neq p_2$, autrement dit si la corrélation porte sur des symboles différents, on a $E(a_{p1} a_{p2}^*) = 0$. De même un changement de *n* en *n+L*, c'est-à-dire un changement de $p_1$ (resp. $p_2$) en $p_1$,+1 (resp. $p_2$+1) laisse la fonction $R_e(n,m)$ invariante. Autrement dit, la fonction de corrélation est périodique par rapport à sa première variable *n* et de période *L*. En considérant la première période, c'est-à-dire $0 \leq n \leq L$, on peut montrer que $R_e(n,m)$ est non nulle seulement si $-n \leq m < N-n$, autrement dit si le décalage temporel est inférieur à un temps symbole. Ceci se comprend dans la mesure où deux symboles consécutifs ne sont pas corrélés.

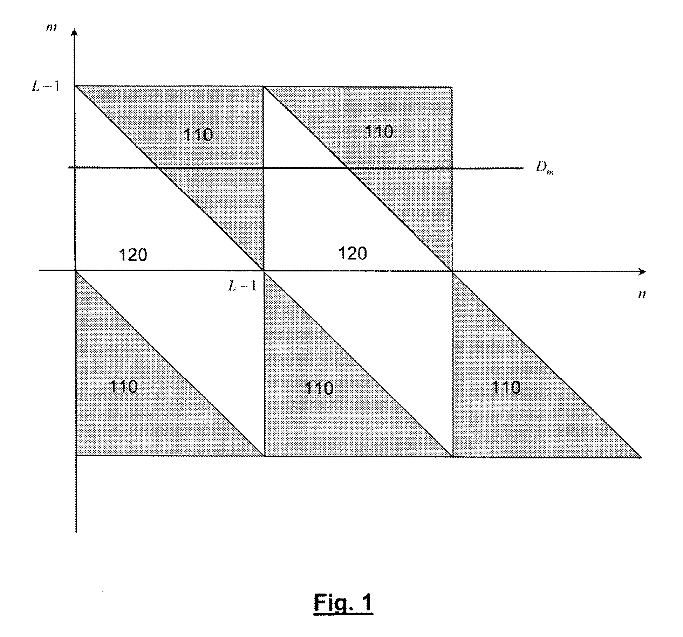

La Fig. 1 illustre la distribution des valeurs prises par la fonction d'autocorrélation $R_e(n,m)$ en fonction des valeurs *n* et *m*.

On notera que la fonction d'autocorrélation $R_e(n,m)$ prend la valeur nulle dans les triangles grisés et des valeurs non nulles dans les parallélogrammes laissés en clair.

En absence de signal étalé spectralement, c'est-à-dire en présence de seul bruit, la fonction d'autocorrélation est nulle partout sauf sur la droite *m*=0.

L'idée à la base de l'invention est de considérer l'énergie moyenne *J* de la fonction d'autocorrélation pour $m \neq 0$, c'est-à-dire :

$$J = \sum_{m \neq 0} \lim_{L \to \infty} \left( \sum_{n=0}^{L-1} |R_e(n,m)|^2 \right) \qquad (5)$$

L'énergie *J* peut être considérée comme une somme d'énergies moyennes $J_m$ calculées sur chacune des droites $D_m$ parallèle à l'axe des abscisses et d'ordonnée $m \neq 0$.

La détection de la présence/absence d'un signal étalé spectralement est alors réalisée par comparaison de la valeur *J* avec une valeur de seuil $J_0$ qui sera présentée plus loin. Autrement dit, si $J>J_0$ on conclut à la présence d'un signal étalé et dans le cas contraire, on conclut que la bande est libre.

Du fait de la périodicité de la fonction de corrélation, celle-ci peut être développée selon une série de Fourier :

$$R_e(n,m) = \sum_{k \in Z} R_e^{k\alpha}(m) e^{2i\pi k\alpha n} \qquad (6)$$

où $R_e^{k\alpha}(m)$ est le $k^{ième}$ coefficient de Fourier et $\alpha = \dfrac{1}{L}$ et de manière plus générale $\alpha = \dfrac{T_e}{LT_c}$ où $T_e$ est la période d'échantillonnage. Les valeurs $k\alpha$ pour *k* entier relatif sont appelées fréquences cycliques et les coefficients $R_e^{k\alpha}(m)$, les coefficients de corrélation cyclique.

L'énergie de la fonction d'autocorrélation peut s'exprimer de manière équivalente dans le domaine spectral, soit :

$$J = \sum_{m \neq 0} \sum_k |R_e^{k\alpha}(m)|^2 \qquad (7)$$

Selon une première variante de réalisation de l'invention, l'énergie *J* est calculée à partir des coefficients de corrélation cyclique. En pratique, ces derniers peuvent'être estimés de la manière suivante :

$$\hat{R}_e^{k\alpha}(m) = \frac{1}{U} \sum_{u=0}^{U-1} s(uT_e)s^*((u-m)T_e)e^{2i\pi uk\alpha} \qquad (8)$$

où $U$ est la largeur d'une fenêtre de corrélation exprimée en nombre d'échantillons. Il est clair pour l'homme du métier que d'autres estimations peuvent être envisagées sans pour autant sortir du cadre de l'invention.

Ce premier mode de réalisation trouve application dans le contexte d'une estimation semi-aveugle où l'on connaît *a priori* la valeur α, et par conséquent les valeurs des fréquences cycliques. Ce sera notamment le cas si le terminal connaît la période chip $T_c$ du signal étalé et la longueur $L$ des séquences d'étalement. Dans ce cas, l'énergie $J$ est alors estimée par :

$$\hat{J} = \sum_{m \neq 0} \sum_{k} \left| \frac{1}{U} \sum_{u=0}^{U-1} s(uT_e)s^*((u-m)T_e)e^{2i\pi u \frac{kT_e}{LT_c}} \right|^2 \qquad (9)$$

On remarquera que cette estimation tend vers la valeur de $J$ donnée par l'expression (5) lorsque $U$ est suffisamment grand.

Selon une seconde variante de réalisation de l'invention, le terminal n'a pas connaissance *a priori* des caractéristiques des séquences d'étalement. Dans ce cas, l'énergie de la fonction d'autocorrélation est simplement estimée de manière aveugle à partir du coefficient de corrélation cyclique à la fréquence nulle, à savoir :

$$\hat{J} = \sum_{m \neq 0} \left| R_e^0(m) \right|^2 = \sum_{m \neq 0} \left| \frac{1}{U} \sum_{u=0}^{U-1} s(uT_e)s^*((u-m)T_e) \right|^2 \qquad (10)$$

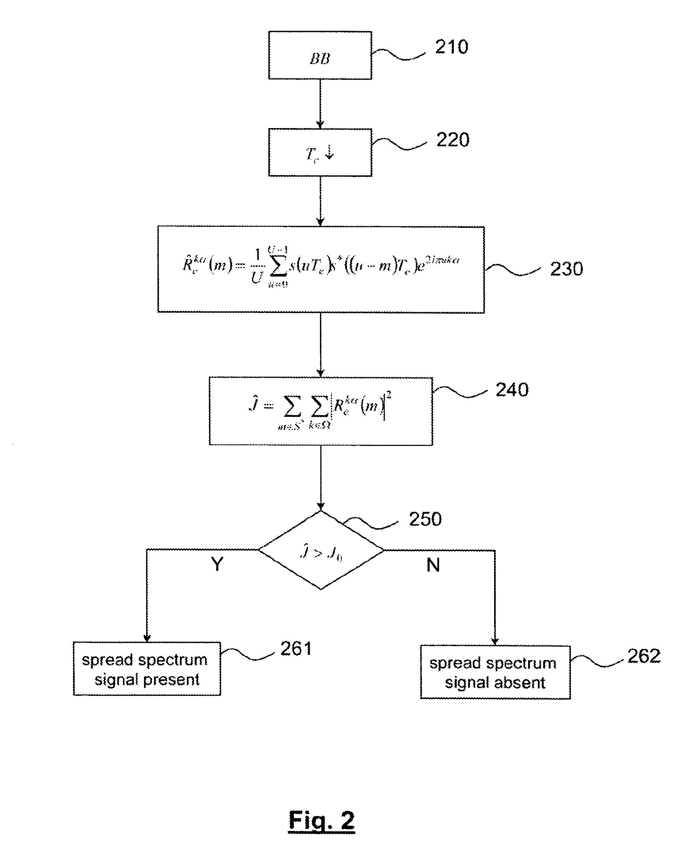

La Fig. 2 représente l'organigramme d'une méthode de détection semi-aveugle de la présence d'un signal étalé spectralement dans une bande spectrale d'intérêt, selon un premier mode de réalisation de l'invention.

A la première étape 210, on filtre le signal reçu et on le démodule pour le translater en bande de base.

En 220 on échantillonne le signal $s$ ainsi démodulé, à la fréquence $\frac{1}{T_c}$, supposée connue du terminal.

On obtient ainsi une séquence d'échantillons $\{s(u)\}_u$.

A l'étape 230, on calcule les coefficients de corrélation cyclique du signal échantillonné à l'aide de l'expression (8).

A l'étape 240, on calcule l'énergie de la fonction d'autocorrélation à l'aide de la formule (7), ce qui revient à une estimation de cette énergie grâce à l'expression (9).

En pratique, la sommation sur les décalages temporels est limitée à un support borné $S^*$ ne comprenant pas la valeur $m=0$, par exemple à un intervalle $[M_{min},M_{max}]$ ou bien à la réunion de deux intervalles $[-M_{max},-M_{min}]\cup[M_{min},M_{max}]$, où $M_{min},M_{max}$ sont des entiers strictement positifs. De même, la sommation sur les fréquences cycliques peut être limitée à un support borné $\Omega$ inclus dans l'ensemble $\left\{ k \middle| 0 \leq k \frac{T_e}{LT_c} < 1 \right\}$, par exemple à un intervalle $[K_{min}, K_{max}]$ où $K_{min},K_{max}$ sont des entiers strictement positifs.

On notera que l'énergie $\hat{J}$ est en définitive obtenue de la manière suivante :

$$\hat{J} = \sum_{m \in S^*} \sum_{k \in \Omega} \left| \frac{1}{U} \sum_{u=0}^{U-1} s(uT_e)s^*\big((u-m)T_e\big)e^{2i\pi u \frac{kT_e}{LT_c}} \right|^2 \qquad (11)$$

A l'étape 250, on compare l'énergie estimée $\hat{J}$ à une valeur de seuil prédéterminée $J_0$.

On détermine avantageusement le seuil $J_0$ en fonction du rapport $\dfrac{U}{\sigma^4}$, où $\sigma^2$ est, comme on l'a dit, la variance de bruit. Pour les faibles rapports signal à bruit, on pourra utiliser l'approximation $\sigma^2 = \dfrac{1}{U}\sum\limits_{u=0}^{U-1}\big|s(uT_e)\big|^2$.

On peut montrer que si l'on choisit $J_0$ vérifiant l'équation :

$$J_0 - \frac{\sigma^4}{U}\ln\left(\sum_{j=0}^{\kappa-1}\left(\frac{J_0 U}{\sigma^4}\right)^j \frac{1}{j!}\right) = 3,91\frac{\sigma^4}{U} \qquad (12)$$

où $\kappa = Card(S^*)Card(\Omega)$, la probabilité de mauvaise détection c'est-à-dire la probabilité que l'on conclue à une présence de signal étalé spectralement, alors qu'il est absent dans la bande d'intérêt, tend vers 2% lorsque $U$ tend vers l'infini.

Si $\hat{J} > J_0$, on conclut en 261 à la présence d'un signal étalé spectralement dans la bande d'intérêt, et dans le cas contraire en 262 à son absence.

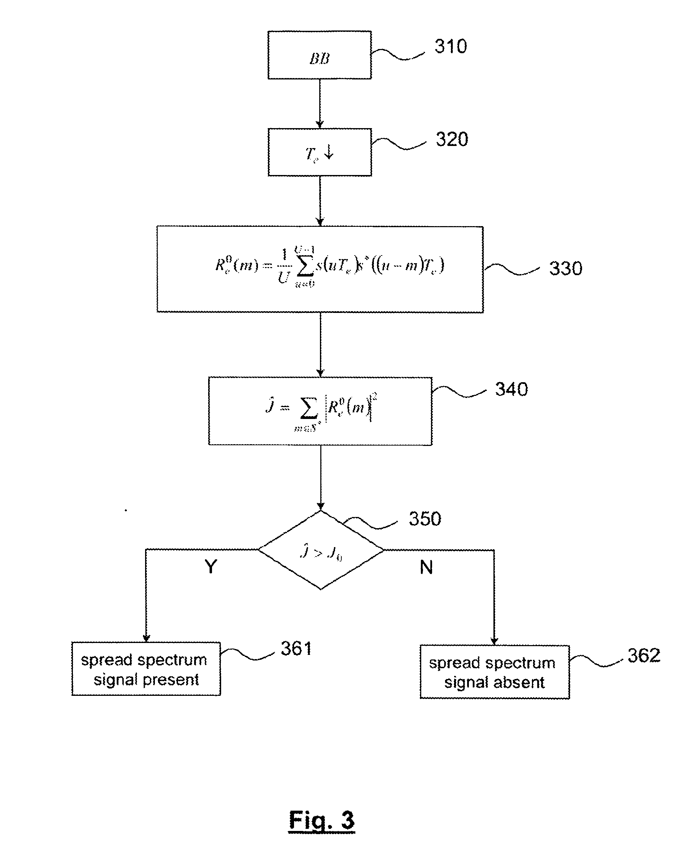

La Fig. 3 représente l'organigramme d'une méthode de détection aveugle de la présence d'un signal étalé spectralement dans une bande spectrale d'intérêt, selon un second mode de réalisation de l'invention.

A l'étape 310, on filtre le signal reçu dans la bande d'intérêt et on le translate en bande de base.

A l'étape 320, on échantillonne le signal obtenu à la fréquence de Nyquist.

En 330, on estime le coefficient de corrélation cyclique $R_e^0(m)$.

En 340, on estime l'énergie de la fonction d'autocorrélation à partir de l'expression (10). En pratique, de même que pour le premier mode de réalisation, la sommation sur les valeurs de décalage temporel est limitée à un support borné $S^*$ pouvant avoir les mêmes formes que précédemment.

En définitive l'énergie $\hat{J}$ est donc obtenue par :

$$\hat{J} = \sum_{m \in S^*} \left| \frac{1}{U} \sum_{u=0}^{U-1} s(uT_e)s^*\big((u-m)T_e\big) \right|^2 \qquad (13)$$

En 350, on compare la valeur $\hat{J}$ à une valeur de seuil $J_0$, déterminée comme pour le premier mode de réalisation (avec $card(\Omega)=1$).

Si $\hat{J} > J_0$, on conclut en 361 à la présence d'un signal étalé spectralement dans la bande d'intérêt, et dans le cas contraire en 362 à son absence.

Cette méthode de détection de présence/absence d'un signal étalé spectralement dans une bande d'intérêt peut être utilisée par un terminal de télécommunication opportuniste avant de transmettre dans cette bande.

Cette même méthode peut être utilisée pour des opérations de police spectrale, notamment pour détecter une occupation illicite du spectre.

**Revendications**

1. Méthode de détection de présence ou d'absence d'un signal étalé spectralement dans une bande de fréquence d'intérêt d'un signal reçu, **caractérisée en ce que** :

   - on calcule la fonction d'autocorrélation dudit signal reçu pour un ensemble ($S*$) de valeurs non nulles de décalage temporel ($m$) ;

   - on détermine au moins un coefficient de corrélation cyclique $\left( R_e^{k\alpha}(m) \right)$ de la fonction d'autocorrélation pour lesdites valeurs non nulles de décalage temporel ;
   - on estime l'énergie de la fonction d'autocorrélation à partir de la somme quadratique des valeurs prises par ledit coefficient de corrélation cyclique pour lesdites valeurs non nulles de décalage temporel ;
   - on compare l'énergie ainsi estimée à une valeur de seuil prédéterminée et l'on déduit du résultat de la comparaison la présence ou l'absence dudit signal étalé spectralement dans le signal reçu.

2. Méthode de détection selon la revendication 1, **caractérisée en ce que** l'on détermine une pluralité de coefficients de corrélation cyclique $\left( R_e^{k\alpha}(m) \right)$ de la fonction d'autocorrélation, chaque coefficient de corrélation cyclique étant calculé pour lesdites valeurs non nulles de décalage temporel.

3. Méthode de détection selon la revendication 2, **caractérisée en ce que** lesdits coefficients de corrélation cyclique sont calculés par :

$$\hat{R}_e^{k\alpha}(m) = \frac{1}{U} \sum_{u=0}^{U-1} s(uT_e) s^*((u-m)T_e) e^{2i\pi uk\alpha}$$

où s() est le signal reçu, après translation en bande de base, $U$ est la taille de la fenêtre de corrélation, $T_e$ est la période d'échantillonnage, exprimée en nombre d'échantillons, $m$ est un décalage temporel exprimé en nombre d'échantillons, $k$ est un entier relatif, $\alpha = \dfrac{T_e}{LT_c}$

est le rapport de la période d'échantillonnage à la durée de la séquence d'étalement ayant servi à étaler le spectre du signal.

4. Méthode de détection selon la revendication 3, **caractérisée en ce que** l'énergie de la fonction d'autocorrélation est estimée à partir de :

$$\hat{J} = \sum_{m \in S^*} \sum_{k \in \Omega} \left| R_c^{k\alpha}(m) \right|^2$$

où $\Omega$ est un ensemble fini d'entiers relatifs et $S*$ est un ensemble fini d'entiers relatifs ne comprenant pas la valeur nulle.

5. Méthode de détection selon la revendication 1, **caractérisée en ce que** l'on détermine un coefficient de corrélation cyclique $\left( R_e^0(m) \right)$ de la fonction d'autocorrélation pour une pluralité de valeurs de décalage temporel.

**6.** Méthode de détection selon la revendication 5, **caractérisée en ce que** ledit coefficient de corrélation cyclique est obtenu par :

$$R_e^0(m) = \frac{1}{U} \sum_{u=0}^{U-1} s(uT_e)s^*((u-m)T_e)$$

où s() est le signal reçu, après translation en bande de base, $U$ est la taille de la fenêtre de corrélation, $T_e$ est la période d'échantillonnage, exprimée en nombre d'échantillons, $m$ est un décalage temporel exprimé en nombre d'échantillons.

**7.** Méthode de détection selon la revendication 6, **caractérisée en ce que** l'énergie de la fonction d'autocorrélation est estimée à partir de :

$$\hat{J} = \sum_{m \in S^*} \left| R_e^0(m) \right|^2$$

où $S^*$ est un ensemble fini d'entiers relatifs ne comprenant pas la valeur nulle.

**8.** Méthode de détection selon la revendication 4 ou 7, **caractérisée en ce que** l'énergie estimée $\hat{J}$ est comparée à une valeur de seuil prédéterminé $J_0$, calculée en fonction du $\dfrac{U}{\sigma^4}$ où $\sigma^2$ est la variance de bruit.

**9.** Méthode de détection selon la revendication 8, **caractérisée en ce que** la variance de bruit, $\sigma^2$, est estimée par :

$$\sigma^2 = \frac{1}{U} \sum_{u=0}^{U-1} \left| s(uT_e) \right|^2$$

**10.** Méthode de détection selon la revendication 8 ou 9, **caractérisée en ce qu'**on conclut à la présence d'un signal étalé spectralement dans la bande de fréquence d'intérêt si $\hat{J} > J_0$ et que dans le cas contraire on conclut à l'absence d'un tel signal dans ladite bande.

**Claims**

**1.** A method for detecting the presence or absence of a spread spectrum signal in a frequency band of interest of a received signal, **characterized in that**:

    - the autocorrelation function of said received signal is calculated for a set ($S^*$) of non-zero time shift values ($m$);

    - at least one cyclic correlation coefficient $\left( R_e^{k\alpha}(m) \right)$ of the autocorrelation function is determined for said non-zero time shift values;
- the energy of the autocorrelation function is estimated from the quadratic sum of the values assumed by said cyclic correlation coefficient for said non-zero time shift values;
- the thereby estimated energy is compared with a predetermined threshold value and the presence or the absence of said spread spectrum signal in the received signal is inferred from the result of the comparison.

2. The detection method according to claim 1, **characterized in that** a plurality of cyclic correlation coefficients ($R_e^{k\alpha}(m)$) of the autocorrelation function are determined, each cyclic correlation coefficient being calculated for said non-zero time shift values.

3. The detection method according to claim 2, **characterized in that** said cyclic correlation coefficients are calculated by:

$$\hat{R}_e^{k\alpha}(m) = \frac{1}{U}\sum_{u=0}^{U-1} s(uT_e)s^*((u-m)T_e)e^{2i\pi uk\alpha}$$

wherein $s()$ is the received signal, after translation into the base band, $U$ is the size of the correlation window, $T_e$ is the sampling period, expressed as a number of samples, $m$ is a time shift expressed as a number of samples, $k$ is a relative integer, $\alpha = \dfrac{T_e}{LT_c}$ is the ratio of the sampling period to the duration of the spreading sequence which has been used for spreading the spectrum of the signal.

4. The detection method according to claim 3, **characterized in that** the energy of the autocorrelation function is estimated from:

$$\hat{J} = \sum_{m \in S^*}\sum_{k \in \Omega}\left|R_e^{k\alpha}(m)\right|^2$$

wherein $\Omega$ is a finite set of relative integers and $S^*$ is a finite set of relative integers not comprising the zero value.

5. The detection method according to claim 1, **characterized in that** a cyclic correlation coefficient ($R_e^0(m)$) of the autocorrelation function is determined for a plurality of time shift values.

6. The detection method according to claim 5, **characterized in that** said cyclic correlation coefficient is obtained by:

$$R_e^0(m) = \frac{1}{U}\sum_{u=0}^{U-1} s(uT_e)s^*((u-m)T_e)$$

wherein $s()$ is the received signal, after translation into the base band, $U$ is the size of the correlation window, $T_e$ is the sampling period, expressed as a number of samples, $m$ is a time shift expressed as a number of samples.

7. The detection method according to claim 6, **characterized in that** the energy of the autocorrelation function is estimated from:

$$\hat{J} = \sum_{m \in S^*} \left| R_e^0(m) \right|^2$$

wherein $S^*$ is a finite set of relative integers not comprising the zero value.

8. The detection method according to claim 4 or 7, **characterized in that** the estimated energy $\hat{J}$ is compared with a predetermined threshold value $J_0$, calculated as a function of the $\dfrac{U}{\sigma^4}$ wherein $\sigma^2$ is the noise variance.

9. The detection method according to claim 8, **characterized in that** the noise variance, $\sigma^2$, is estimated by:

$$\sigma^2 = \frac{1}{U} \sum_{u=0}^{U-1} \left| s(uT_e) \right|^2$$

10. The detection method according to claim 8 or 9, **characterized in that** it is concluded that a spread spectrum signal is present in the frequency band of interest if $\hat{J} > J_0$ and that in the opposite case it is concluded that such a signal is absent in said band.

**Patentansprüche**

1. Verfahren zur Erfassung des Vorhandenseins oder des Fehlens eines spektral gespreizten Signals in einem interessierenden Frequenzband eines empfangenen Signals, **dadurch gekennzeichnet, dass**:

   - man die Autokorrelationsfunktion des empfangenen Signals für eine Gesamtheit ($S^*$) von Werten der zeitlichen Verzögerung ($m$) ungleich Null berechnet;

   - man wenigstens einen zyklischen Korrelationskoeffizienten $\langle R_e^{k\alpha}(m) \rangle$ der Autokorrelationsfunktion für die Werte der zeitlichen Verzögerung ungleich Null bestimmt;
   - man die Energie der Autokorrelationsfunktion ausgehend von der Quadratsumme der Werte bestimmt, die der zyklische Korrelationskoeffizient für die Werte der zeitlichen Verzögerung ungleich Null annimmt;
   - man die derart bestimmte Energie mit einem vorbestimmten Schwellenwert vergleicht und man aus dem Ergebnis des Vergleichs auf das Vorhandensein oder auf das Fehlen des spektral gespreizten Signals in dem empfangenen Signal schließt.

2. Verfahren zur Erfassung nach Anspruch 1, **dadurch gekennzeichnet, dass** man eine Mehrzahl von zyklischen Korrelationskoeffizienten $\langle R_e^{k\alpha}(m) \rangle$ der Autokorrelationsfunktion bestimmt, wobei jeder zyklische Korrelationskoeffizient für die Werte der zeitlichen Verzögerung ungleich Null berechnet wird.

3. Verfahren zur Erfassung nach Anspruch 2, **dadurch gekennzeichnet, dass** die zyklischen Korrelationskoeffizienten berechnet werden durch:

$$\hat{R}_e^{k\alpha}(m) = \frac{1}{U}\sum_{u=0}^{U-1} s(uT_e)s^*((u-m)T_e)e^{2i\pi uk\alpha}$$

wobei s() das empfangene Signal nach Übertragung im Basisband ist, wobei $U$ die Größe des Korrelationsfensters ist, wobei $T_e$ die Abtastperiode ist, ausgedrückt als Zahl von Abtastungen, wobei $m$ eine zeitliche Verzögerung ist, ausgedrückt als

Zahl von Abtastungen, wobei $k$ eine relative ganze Zahl ist, wobei $\alpha = \dfrac{T_e}{LT_c}$ das Verhältnis der Abtastperiode zur Dauer der Spreizungssequenz ist, die zum Spreizen des Spektrums des Signals gedient hat.

4. Verfahren zur Erfassung nach Anspruch 3, **dadurch gekennzeichnet, dass** die Energie der Autokorrelationsfunktion bestimmt wird ausgehend von:

$$\hat{J} = \sum_{m \in S^*}\sum_{k \in \Omega}\left|R_e^{k\alpha}(m)\right|^2$$

wobei $\Omega$ eine endliche Gesamtheit von relativen ganzen Zahlen ist, und wobei $S^*$ eine endliche Gesamtheit von relativen ganzen Zahlen ist, die nicht den Wert Null enthält.

5. Verfahren zur Erfassung nach Anspruch 1, **dadurch gekennzeichnet, dass** man einen zyklischen Korrelationskoeffizienten $(R_e^0(m))$ der Autokorrelationsfunktion für eine Mehrzahl von Werten der zeitlichen Verzögerung bestimmt.

6. Verfahren zur Erfassung nach Anspruch 5, **dadurch gekennzeichnet, dass** der zyklische Korrelationskoeffizient erhalten wird durch:

$$R_e^0(m) = \frac{1}{U}\sum_{u=0}^{U-1} s(uT_e)s^*((u-m)T_e)$$

wobei $s()$ das empfangene Signal nach Übertragung im Basisband ist, wobei $U$ die Größe des Korrelationsfensters ist, wobei $T_e$ die Abtastperiode ist, ausgedrückt als Zahl von Abtastungen, wobei $m$ eine zeitliche Verzögerung ist, ausgedrückt als Zahl von Abtastungen.

7. Verfahren zur Erfassung nach Anspruch 6, **dadurch gekennzeichnet, dass** die Energie der Autokorrelationsfunktion geschätzt wird ausgehend von:

$$\hat{J} = \sum_{m \in S^*}\left|R_e^0(m)\right|^2$$

wobei $S^*$ eine endliche Gesamtheit von relativen ganzen Zahlen ist, die nicht den Wert Null enthält.

8. Verfahren zur Erfassung nach Anspruch 4 oder 7, **dadurch gekennzeichnet, dass** die bestimmte Energie $\hat{J}$ mit

einem vorbestimmten

Schwellenwert $J_0$ verglichen wird, der als Funktion des Verhältnisses $\dfrac{U}{\sigma^4}$ berechnet wird, wobei $\sigma^2$ die Rauschvarianz ist.

**9.** Verfahren zur Erfassung nach Anspruch 8, **dadurch gekennzeichnet, dass** die Rauschvarianz $\sigma^2$ bestimmt wird durch:

$$\sigma^2 = \frac{1}{U} \sum_{u=0}^{U-1} \left| s(uT_e) \right|^2$$

**10.** Verfahren zur Erfassung nach Anspruch 8 oder 9, **dadurch gekennzeichnet, dass** man auf das Vorhandensein eines spektral gespreizten Signals in dem interessierenden Frequenzband schließt, wenn $\hat{J} > J_0$, und dass man im entgegengesetzten Fall auf das Fehlen eines solchen Signals in dem Band schließt.

**Fig. 1**

$$\boxed{BB}$$ ~ 210

$$\boxed{T_c \downarrow}$$ ~ 220

$$\hat{R}_c^{k\alpha}(m) = \frac{1}{U} \sum_{u=0}^{U-1} s(uT_c)s^*\big((u-m)T_c\big)e^{2\pi m k \alpha}$$ ~ 230

$$\hat{J} = \sum_{m \in S} \sum_{k \in \Omega} \left| R_c^{k\alpha}(m) \right|^2$$ ~ 240

~ 250

$$\hat{J} > J_0$$

Y      N

| spread spectrum signal present | ~ 261 |

| spread spectrum signal absent | ~ 262 |

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Cognitive radio : an integrated agent architecture for software defined radio. **J. MITOLA.** PhD Dissertation. Royal Institute of Technology, 08 Mai 2000

- **G. BUREL.** Detection of spread spectrum transmissions using fluctuations of correlation estimators. *Proc. of IEEE-ISPACS,* 05 Novembre 2000
- **KAREN W. HALFORD.** New-user identification in a CDMA system. *IEEE Trans. on Comm.,* Janvier 1998, vol. 46 (1), 144-155